# EUROPÄISCHE PATENTSCHRIFT

(11) **EP 0 804 073 B1**
(45) Veröffentlichungstag und Bekanntmachung des Hinweises auf die Patenterteilung: **07.01.1999**
(21) Anmeldenummer: 95935812.8
(22) Anmeldetag: 26.10.1995
(51) Int. Cl.: A01N 1/02

(54) **KRYOKONSERVIERUNG UND TIEFTEMPERATURBEARBEITUNG VON BIOLOGISCHEN OBJEKTEN**
CRYO-PRESERVATION AND LOW-TEMPERATURE PROCESSING OF BIOLOGICAL OBJECTS
CONSERVATION PAR CRYOGENIE ET TRAITEMENT A BASSE TEMPERATURE D'OBJETS BIOLOGIQUES

(30) Priorität: 26.10.1994 DE 4438232
(43) Veröffentlichungstag der Anmeldung: 05.11.1997
(73) Patentinhaber: FRAUNHOFER-GESELLSCHAFT ZUR FÖRDERUNG DER ANGEWANDTEN FORSCHUNG E.V., 80636 München (DE)
(72) Erfinder: FUHR, Günter, D-13127 Berlin (DE); HORNUNG, Jan, D-13189 Berlin (DE); HAGEDORN, Rolf, D-13057 Berlin (DE); MÜLLER, Torsten, D-12439 Berlin (DE); HOWITZ, Steffen, D-01309 Dresden (DE); WAGNER, Bernd, D-25582 Looft (DE); HOFMAN, Ulrich, D-25524 Itzehoe (DE)
(74) Vertreter: Hertz, Oliver, Dr.
(86) Internationale Anmeldenummer: DE9501490
(87) Internationale Veröffentlichungsnummer: WO9613159

(56) Entgegenhaltungen:
- EP-A- 0 475 409
- WO-A-82/02562
- WO-A-93/03493
- WO-A-93/22598
- US-A- 4 142 656
- US-A- 4 531 373

## Beschreibung

Die Erfindung betrifft ein Verfahren und eine Vorrichtung, um mikroskopische Objekte, insbesondere biologische Objekte, einzelne Zellen, Zellverbänden oder Zellbestandteile oder Makromoleküle in definierter Lage nach vorgebbaren Temperaturprogrammen in flächigen, ggf. räumlichen Mustern, zu kryokonservieren, in tiefgefrorenem Zustand zu verändern und unter Beibehaltung der Vitalität der Zellen wieder aufzutauen.

In der Medizintechnik, bei der Anlage von Zellbanken und in der biologisch-pharmazeutischen Forschung werden seit Jahrzehnten Zellen eingefroren und nach vorgegebenen Prozeduren wieder aufgetaut, ohne daß die Lebensprozesse bei zumindest einem Teil des kryokonservierten Materials irreversibel gestört werden. Zu diesem Zweck werden die Zellen zumeist in einer Lösung suspendiert und in Mikrotubes eingefroren (R. Ian Freshney: Tierische Zellkulturen, Walter de Gruyter 1990, S.221). Die Lösungen werden mit Substanzen versetzt, die die Eiskristallbildung beeinflussen (sogenannte Kryokonservierungsmitteln wie z.B. Dimethylsulfoxid, Glyzerin). Diese Techniken haben sich bewährt und führen bei sachgerechter Anwendung zu Überlebensraten zwischen wenigen Prozent und nahezu 100%. Da das Zellgut bei sehr vielen traditionellen Anwendungen nach dem Auftauen zuerst in Kultur genommen und stark vermehrt wird, spielt die Überiebensrate nach der Kryokonservierung dieser Art eine untergeordnete Rolle. Das setzt allerdings voraus, daß genügend Zellen zur Verfügung stehen.

Bei der immer selektiver werdenden Arbeitsweise der Zellgewinnung in der Medizin, Genetik oder Molekularbiologie ist das jedoch mit steigender Tendenz nicht mehr der Fall. Als ein Beispiel sei die gezielte genetische Veränderung lebender Zellen genannt, die nur bei einzelnen Zellen zum tatsächlich gewünschten Ergebnis führt. Mit gesonderten Auswahlverfahren (Screening) werden diese Zellen isoliert und stehen für weitere Anwendungen zur Verfügung. Eine derartige Anwendung stellt die Hybridomzellengewinnung dar (B. Gustafsson, Cryopreservation of Hybridomas, in "Methods in Molecular Biology, Vol.5, Eds. J.W.Pollard and J.M. Walker, 619-621), wie sie zur Produktion monoklonaler Antikörper z.B. Krebstherapie erforderlich und üblich ist, bei der in der Regel nur ganz wenige Zellen aus Zellpärchen (Lymphozyt, Myelomzelle) gebildet und kryokonserviert werden müssen. Gerade bei den hier üblichen geringen Zellzahlen ist eine Kryokonservierung nur bedingt möglich (R. Ian Freshney: Tierische Zellkulturen, Walter de Gruyter 1990, S.221), da beim Umgang mit den auftretenden kleinen Lösungsmengen und der Wiedergewinnung der Zellen große Schwierigkeiten entstehen. Weiterhin ist eine individuelle Identifizierung der Zellen bei Suspensionstechniken nicht möglich, was jedoch bei den oben genannten Verfahren gefordert ist.

Als besonders nachteilig erweist sich beim Einfrieren von Zellen in Zellsuspensionen der Gradient der Temperaturverteilung in der Lösung, da die Einfrierbedingungen für die Einzelzelle nicht bekannt bzw. sehr unterschiedlich sind, weil deren Position in der Suspension undefiniert ist und nicht konstant bleibt (M.J. Ashwood-Smith and J. Farrant, Low Temperature Preservation in Medicine and Biology, Kent, England (1980)). Die Reproduzierbarkeit der Bedingungen und damit die Standardisierung ist jedoch in zunehmendem Maße wichtig, wenn nach der Kryokonservierung mit Einzelzellen weiter gearbeitet werden soll.

Eine modifizierte Art der Kryokonservierung, speziell für adhärente Zellen, ist die Konservierung von auf Oberflächen aufgewachsenen Zellen (T. Ohno, A simple method for in situ freezing of anchorage-dependent cells. In: A. Doyle, J.B. Griffiths, D.G. Newell, Cell and Tissue Culture, John Wiley & Sons, S. 4C:2.1). In der Regel werden dazu auf geeigneten Substraten (behandelte Glas- oder Plastikoberflächen) dünne Zellschichten, sogenannte Zellmonolayer, aufwachsen gelassen und nachfolgend als Zellrasen eingefroren und aufgetaut. Dieses Verfahren hat den Nachteil, daß der Zellbewuchs zufällig erfolgt und die Einzelzelle auch hier schwer über den Kryozeitraum hinaus lokalisiert werden kann. Da bisher zum Aufwachsen sogenannte Mikrotiterplatten verwendet werden, können auch hier keine ortsdefinierten Bedingungen erreicht werden. Hinzu kommt, daß das Verfahren nur für adhärent wachsende Zellen anwendbar ist.

Es ist bekannt, und wird zur Kryokonservierung von Zellen für die Elektronenmikroskopie (J.R.Harris, Electron Microscopy in Biology, IRL Press (1991) genutzt, daß Zellen in Mikrotropfen über Düsen in eine stark unterkühlte Atmosphäre eingesprüht werden können (H. Plattner, W.W. Schmitt-Fumian and L. Bachmann, Cryofixation of singe cells by spray-freezing, in " E.L. Benedetti and P.Favard, Freez-etching. Techniques and Application, Soc. Franc. Microsc. Electronique, Paris 1973, 81-100) und auf diese Weise sehr schnell gefrieren (Kühlgeschwindigkeiten von bis zu 10 000 °C/s). Dieses Verfahren hat jedoch den Nachteil, daß die Zellen in einen Lagerbehälter oder eine Kryoflüssigkeit ohne definierte Lagebeziehung fallen. Eine gezielte Kombination von Zellen und deren individuelle Identifizierung ist nicht möglich.

Dabei können Mikrotropfenschußeinrichtungen benutzt werden, wie sie z.B. bei Druckern zur Erzeugung von Tintentröpfchen, aber auch zum Aufbringen von Klebern und anderen Flüssigkeiten auf Oberflächen bekannt sind. Auch das Verschießen von Zellen in Mikrotropfen ist bekannt und wird in Zellsortiergeräten angewendet (M.R. Melamed, T. Lindmo and M.L.Mendelsohn (Eds), Flow Cytometry and Sorting, J.Wiley, New York (1990), 171 - 179). Die Zellen werden hierbei einzeln in Mikrotropfen verschossen, über eine Ablenkvorrichtung (z.B. elektrische Felder) räumlich sortiert und in Sammelgefäße oder auf Zellkultivierungssubstrate aufgebracht. Auch hiermit ist keine individuelle Handhabung der Objekte möglich, weil größere Zellmengen (1000 bis 1 000 000 Zellen) in relativ große Gefäße sortiert werden.

Gegenüber diesem Stand der Technik liegt der vorliegenden Erfindung die **Aufgabe** zugrunde, ein Verfahren und eine Vorrichtung anzugeben, mit denen es möglich ist, mikroskopische Objekte, insbesondere biologische Objekte, einzelne Zellen, Zellverbände oder Zellbestandteile oder Makromolekülsuspensionen reproduzierbar, geordnet und lagefixiert einzufrieren, zu bearbeiten und zu einem späteren Zeitpunkt unter Beibehaltung der Vitalität wieder aufzutauen, wobei eine individuelle Identifizierung der eingefrorenen und kryokonservierten Objekte möglich sein soll.

Diese Aufgabe wird durch die Gegenstände der Patentansprüche 1 und 19 gelöst. Vorteilhafte Ausführungsformen ergeben sich aus den abhängigen Ansprüchen. Diese konkretisieren und erweitern den abstrakten - von Anspruch 1 und 19 in seinen tragenden Merkmalen umrissenen - Gedanken des gezielten Ablegens von biologischen Objekten in Mikrotropfen auf eine temperierte und gegebenfalls mikrostrukturierte Substratoberfläche, die Modifizierung der Oberflächenschichten oder Zellen im Zustand eines Festkörpers, ihre Lagerung und das spätere Auftauen.

Das gezielte Ablegen der biologischen Objekte, die insbesondere durch Zellen gebildet werden, kann mittels Verschließen durch eine Mikrotropfenschußeinrichtung oder durch Positionieren mittels einer Kapillare oder einer Trägerspitze erfolgen. Im letzteren Fall wird an der Spitze, zum Beispiel der Kapillare, ein Mikrotropfen mit dem biologischen Objekt angehängt oder erzeugt. Die Kapillare oder Trägerspitze ist mit einem steuerbaren Geschwindigkeitsprofil in bezug auf die Substratoberfläche beweglich.

Die erfindungsgemäßen Verwendungen der Vorrichtung und des Verfahrens sind im Anspruch 29 erfaßt.

Durch Vereinzeln oder Gruppenbildung der sich in einer Umhüllungslösung befindlichen mikroskopischen Objekte bzw. durch Portionieren der Umhüllungslösung und damit Einschluß der Objekte oder der Makromoleküle oder Portionierung der reinen Umhüllungslösung in Mikrotropfen (Pikoliter bis wenige Mikroliter) beim Aufbringen auf eine, auf die Temperatur T₁ eingestellte Substratoberfläche, welche so geregelt ist, daß die Mikrotropfen beim Auftreffen auf die Substratoberfläche ortstreu anhaften und gefrieren, werden die sich in den Mikrotropfen befindlichen mikroskopischen Objekte bzw. Makromoleküle kryokonserviert. Unter biologischen Objekten sollen insbesondere einzelne Zellen, Zellverbände und Zellbestandteile verstanden werden. Durch Wahl und gezielte Steuerung der Temperatur T₁ des Substrats können zeitliche Kühlgeschwindigkeiten von wenigen °C/min. bis zu einigen Tausend °C/sek. für die Abkühlung der auftreffenden Mikrotropfen erreicht werden. Durch zeitliche und räumliche Steuerung der Vereinzelung und des Aufbringens auf die Substratoberfläche können wohldefinierte Lagebeziehungen der Mikrotropfen und entsprechend der darin eingeschlossenen Objekte zueinander und zum Substrat erreicht werden. Nach dem Aufbringen der Mikrotropfen lassen sich die Substrate über vorgebbare Temperaturverläufe auf eine Lagertemperatur T₂ oder Bearbeitungstemperatur T₃ bringen, die erfahrungsgemäß unterhalb -80°C, häufig bei -196 °C liegen wird. Für kurzzeitige Lagerung und Behandlungen sind auch höhere Lagertemperaturen möglich, die in jedem Fall aber unterhalb des Gefrierpunktes der Umhüllungslösung liegen.

Unter Umhüllungslösung werden prinzipiell alle Lösungen, Lösungsgemische, Seren oder Kulturmedien verstanden. Umhüllungslösungen für biologische Objekte sollen deren Vitalität gewährleisten, wohingegen für Makromoleküle alle Lösungen und Lösungsgemische denkbar sind. Auch soll, wenn von eingeschlossenen mikroskopischen Objekten die Rede ist, jedes irgendwie geartete Objekt, dessen Abmessungen kleiner als der der Mikrotropfen ist, gemeint sein, also auch insbesondere Liposome, Latexpartikel und andere Mikropartikel. Selbst Umhüllungslösungen bestehend nur aus einer oder mehreren chemischen Komponenten ohne oben genannte Objekte sollen an sich hier unter den Begriff Objekt fallen.

Die Temperierung der Substratoberfläche kann vorzugsweise mittels bekanntem Kühlelement (Peltierelement) oder durch Kontakt mit kryogenen Flüssigkeiten (z.B. flüssigem Stickstoff) erfolgen. Die Temperatur der verschossenen Umhüllungslösung soll für biologische Objekte in physiologischen Bereichen liegen.

Eine bevorzugte Vorrichtung zum Vereinzeln und Aufbringen der biologischen Objekte sind Mikrotropfenschußeinrichtungen, die insbesondere auf dem Prinzip des piezoelektrischen Effekts beruhen, wobei durch eine zeitlich und räumlich frei wählbare Positionierung von Mikrotropfenschußeinrichtung und Substratoberfläche zueinander und eine zeitliche Steuerung des Vereinzel- und Aufbringprozesses die Mikrotropfen in gewünschten Strukturen oder Positionen auf die Substratoberfläche gebracht werden können. Durch diese Mikrotropfenschußeinrichtungen werden Mikrotropfen gleicher Größe erzeugt, die wesentlich für die reproduzierbare und definierte Kryokonservierung sind.

Bei einer weiteren Ausführungsform wird das Überführen der Umhüllungslösung und damit der eingeschlossenen mikroskopischen Objekte und Makromolekülen in Aerosolen (Mikrotropfenwolke) durch bekannte Sprühverfahren bevorzugt, wobei die Aerosole auf die gekühlte Oberfläche gesprüht werden und dort dünne und gefrorene Schichten bilden. Auch hier ist eine zeitliche und auch räumliche Steuerung des Aufbringens möglich.

Unter räumlicher und zeitlicher Strukturierung soll insbesondere eine zwei- und dreidimensionale Anordung der Mikrotropfen auf der Substratoberfläche verstanden werden, wobei die Mikrotropfen gleicher oder unterschiedlicher Umhüllungslösung sein und/oder gleiche oder unterschiedliche mikroskopische Objekte und Makromoleküle enthalten können. Durch das Gefrieren der Umhüllungslösung ist die erfindungsgemäße technische Lehre geeignet, räumliche Strukturen unterschiedlicher biologischer Objekte, Makromoleküle oder auch nur unterschiedlicher Umhüllungslösungen reproduzierbar, definiert, lagefixiert und geordnet zu erzeugen. Die freie Kombinierbarkeit ermöglicht es somit, bisher nicht realisierbare Strukturen stabil zu erzeugen. Durch das Auftauen der auf die Substratoberfläche aufgebrachten Strukturen können die unterschiedlichen Komponenten der Strukturen miteinander in Wechselwirkung gebracht werden, wobei chemische Reaktionen ablaufen oder biologische Objekte untereinander oder mit der veränderte Umgebung in Wechselwirkung treten können oder auch nur das Auftauen von biologischem Material unter anderen Bedingungen als beim Gefrieren erfolgen kann. Derartige Asymmetrien zwischen Einfrier- und Auftaubedingungen, treten bei den bekannten Kryoverfahren zum Teil zwangsläufig auf, lassen sich aber nicht wie in dem hier beschriebenen Verfahren variieren und reproduzierbar wiederholen.

Das Substrat, auf das die Mikrotropfen mit den Zellen aufgebracht werden, kann aus Glas, Plastik, Metall, Halbleitern, Keramiken oder anderen temperaturgradientenbeständigen Materialien bestehen. Im einfachsten Fall handelt es sich um eine glatte, unstrukturierte Oberfläche, auf die die Tropfen in festlegbarem Abstand zueinander aufgebracht werden. Zweckmäßigerweise strukturiert man die Oberfläche des Substrates jedoch, um einerseits ein Lokalisieren und Wiederfinden der Zellen zu ermöglichen, andererseits die Separierung, selektive Vermessung der Zellen, oder den Einfrier- und Auftauprozess zu unterstützen und zu ermöglichen. In diesem Zusammenhang bieten sich vor allem Substrate einer Größe von einigen Quadratmillimetern bis zu einigen Quadratzentimetern (z.B. Halbleiterwafer, Halbleiterchips) an, die mit den Methoden der Halbleitertechnologie strukturiert worden sind. Insbesondere die guten Temperaturleiteigenschaften und die Möglichkeit der räumlichen Strukturierung im Mikrometer- und Submikrometerbereich favorisieren Silizium und seine Oxide sowie andere Halbleitersubstrate, aber auch Metalle und Keramiken als Basismaterial.

Unter Mikrostrukturierung wird hier verstanden, daß sich Aushölungen, Kanäle, Brücken, Durchbrüche oder Erhöhungen, einzeln oder in Mustern bzw. in sich abwechselnder Folge auf der Substratoberfläche befinden, deren Abmessungen in der Regel der Größe der Zellen oder Mikrotropfen entsprechen bzw. feiner oder gröber ausgeführt werden. Typische Maße für tierische Zellen sind 5 bis 100 µm. Im Falle von Bakterien, Mycoplasmen, Viren oder ähnlich kleinen Partikeln handelt es sich um Strukturierungen im Mikrometer und Submikrometerbereich.

Diese Strukturen erfüllen erfindungsgemäß die folgenden Aufgaben:
- mechanische Abgrenzung der Mikrotropfen gegeneinander (z.B. Verhinderung einer Tropfenspreitung), Erhaltung ihrer Individualität u.a. auch hinsichtlich des Auftauens in einer Flüssigkeit, die die gesamte Substratoberfläche benetzt, oder auch räumliche Fixierung zum Aufbringen weiterer Mikrotropfen (mit und ohne Zelle) auf die Stelle, auf der sich ein Vorgängertropfen befindet.
- Installation von Vermessungselementen, wie z.B. Elektroden, optische und andere Sensoren etc.
- Aufbringen von Identifikationsmarkierungen, wie z. B. Zahlen, Quadranten, Linien etc., zur Orientierung des Betrachters auf der Substratoberfläche.
- Unterstützungselemente zum definierten Abtrag von angefrorenem Material oder zum Aufbringen weiterer Schichten auf die tropfenbesetzte Oberfläche. Als Beispiel können Wälle zwischen den Mikrotropfenreihen angesehen werden, die die Tropfenhöhe über- oder unterschreiten und bis zu deren Höhe durch mechanisches oder anderes Abtragen, gefrorene Schichten entfernt bzw. aufgetragen werden können.
- Halterung der Objekte nach dem Auftauen in einer definierten Position (z.B. über elektrische Feldkäfige, die mittels Ultramikroelektroden erzeugt werden) oder Transport der Objekte zu festlegbaren Orten (in Mikrokanälen, mittels Pumpsystemen).
- Weiterverwendung des Substrats als komplexes Meß-, Dosierungs- oder Kultivierungssystem vor und nach dem Einfrieren bzw. Auftauen, sodaß es die Funktion eines Mikrolabors erfüllt. Das kann erreicht werden durch Integration gängiger Halbleiterchips (die Pumpen, Sensoren, aktive Bauelemente wie FET's und LED's enthalten) in die Substratoberfläche direkt oder als Hybridsystem oder auch unmittelbare Nutzung solcher Halbleiterchips.
- modifizieren, abbauen oder aufbauen von Oberflächenteilen der Mikrotropfen nach dem Einfrieren (z.B. durch Laser-Ablation oder Aufschießen weiterer Mikrotropfen),
- festlegen der hydrophob/hydrophilen Balance auf der Mikrometerskala (z.B. durch lokale Beschichtungen mit Tensiden, Amphoteren) oder Erzeugung von Gradienten oder Mustern auf der Oberfläche,
- Anpassung an optische, spektroskopische oder andere Meß- oder Auswerteeinheiten. (z.B. bezüglich räumlicher Auflösung, Absorptionseigenschaften),
- geometrische Standardisierung oder Automatisierung der quantitativen Auswerteverfahren und ihre effiziente technologische und ökonomische Herstellung (z.B. Herstellung gleicher Anordnungen durch Schablonen),
- Integration von Elementen, die auch im tiefgefrorenen Zustand eine Lokalisierung der mikroskopischen Objekte, Zellen und Mikrotropfen, sowie deren Vermessung ertauben. Denkbar sind fluoreszenzmarkierte Strukturen, die auch im Eis und in der Kühlflüssigkeit sichtbar gemacht werden können, oder Elektrodensysteme,
- Installation von Elementen, die ein Aufbringen weiterer Substrate (strukturiert oder unstrukturiert) oder Abdeckungen in der Art einer Sandwich-Bauweise auf die gefrorene Mikrotropfenstruktur gestatten.

Erfindungsgemäß ist es möglich, bei einer oder verschiedenen Kühltemperaturen an dem bereits mit Mikrotropfen und Zellen beauflagten Substrat Veränderungen vorzunehmen. So können parallel zur Zelltropfenverschießung über weitere Mikrotropfenschußsysteme Fluide auf dieselbe Stelle, übereinander oder nebeneinander gebracht werden. Das hat den Vorteil, daß die Lösungszusammensetzung, mit der die Zelle beim Einfrieren in Verbindung kommt, beim Auftauen durch eine ganz anders zusammengesetzte Lösung ersetzt wird. Eine entsprechende Asymmetrie der Lösungszusammensetzung ist mit anderen Kryokonservierungsverfahren für Zellen in dieser Variabilität und räumlichen Dimension nicht möglich.

Die Kühlung des Substrats auf sehr niedrige Temperaturen (< - 100 bis - 273 °C) erlaubt zudem die schnellsten Einfriergeschwindigkeiten, die bisher überhaupt erreicht werden können. Je nach Tropfengröße und deren Deformation beim Auftreffen auf die Substratoberfläche, sowie deren Strukturierung lassen sich Abkühlgeschwindigkeiten von wenigen bis zu mehreren Tausend Grad/Sekunde erzielen.

Ein besonderer Vorteil entsprechender Substrate ist deren Warm- und Kaltsterilisierbarkeit, ggf. auch Reinigung mittels Ultraschall, die sterile und klinisch übliche Bedingungen garantieren.

Einen wesentlichen Aspekt der Erfindung stellt die Musterbildung der Mikrotropfenverteilung auf der Substratoberfläche und die daraus resultierenden Mikroobjektanordnungen dar. So können verschiedene Zellen in kleiner aber auch sehr großer Zahl in unmittelbarer Nachbarschaft aufgefroren werden, deren Wechselwirkungen jedoch erst nach dem Auftauen beginnen können. Das Verfahren und die Vorrichtung sind deshalb geeignet, medizinisch-diagnostische als auch biotechnologisch-pharmazeutische Test- und Sensorchips vor ihrem Einsatz zu präparieren und über längere Zeiträume in unveränderter Lagefixierung und unter Beibehaltung der Vitalität der Zellen zu lagern und zu verschicken.

Mit den gängigen Mikrotropfenschußvorrichtungen, insbesondere nach dem piezoelektrischen Prinzip, lassen sich Schußfrequenzen bis in den kHz-Bereich erzeugen. Damit ist eine Automatisierung, Rechnersteuerung der Musterbildung und Zielanordnung, als auch das Aufbringen großer Zellzahlen (einige Millionen Zellen pro Stunde) in kurzer Zeit mit hoher Präzision möglich. Es ist jedoch auch eine Ablenkung der Mikrotropfen mittels kurzzeitig ansteuerbarer Elektrodensysteme denkbar, wie sie z.B schon beim Electroprinting oder bei den bereits genannten Zellsortiergeräten eingesetzt werden.

Die freie Zugänglichkeit der Mikrotropfen auf der Oberfläche erlaubt es zudem, im eingefrorenen Zustand Materialien des Mikrotropfens oder der Zellen zu entfernen, auszutauschen oder aber stattdessen andere Materialien (z.B. genetisches Material, Enzyme, Membranmaterialien etc.) hinzuzufügen. Es kann sich dabei sowohl um sehr kleine Bereiche (Mikrometer, Nanometer), als auch um den ganzen Mikrotropfen oder das Substrat umfassende Flächen handeln. Auch hierbei kann das Aufbringen des Materials über Mikrotropfenschußeinrichtungen erfolgen. Möglich sind weiterhin das Aufbringen aus einer Aerosol- oder Dampfphase, Sputtern in einer Gasatmosphäre oder Niederschlag im Vakuum von einem Target. Auch das Abtragen von gefrorenen Fluiden kann im Vakuum erfolgen. Dieser Prozess kann bis zur Gefriertrocknung und dem Gefrierätzen geführt werden.

Zwecks mechanischer Stabilität oder zum Erreichen bestimmter Oberflächeneigenschaften an Grenzflächen, können auf den Substratträger vor oder nach Einstellen der Temperatur T₁ (mit oder ohne Mikrotropfen) ultradünne Filme auf vorliegende Oberflächenschichten aufgebracht werden, so daß sich nach dem Auftauen mischbare und/oder nichtmischbare oder sich entmischende Flüssigkeitsbereiche herausbilden. Gemeint sind neben anderem z.B. der Wechsel von hydrophilen- und hydrophoben Flüssigkeiten, aber auch dünne Kontaktschichten, die die Verbindung zwischen dickeren, aufgebrachten Objekten und dem Basistropfen herstellen.

Das Verfahren erlaubt es auch, mehrere Zellschichten übereinander oder durch Trennschichten zueinander isoliert aufzubringen. Es können auf einem Substrat beliebig viele verschiedene Medien nebeneinander auf kleinster Fläche aufgebracht werden. Damit lassen sich Lösungszusammensetzungen in kleinsten Arrays testen, evt. auch durch nachträgliches Aufbringen von Substanzen in verschiedener Konzentration (z.B. auf verschiedene Formulierungen). Eine Anwendung dieser Testsysteme ist das Pharma- und Pflanzenschutzmittel- bzw. Schadstoffscreening.

Ein wesentlicher erfinderischer Teil des Verfahrens ist die Verlagerung einer Vielzahl von Verfahrensschritten in den Tieftemperaturbereich, unter dem im folgenden der Temperaturbereich verstanden wird, der sich von der Gefriertemperatur der Umhüllungslösung bis nahe dem absoluten Nullpunkt der Temperatur erstreckt. Dieser Bereich erlaubt es, die in und um lebende Mikrosysteme üblicherweise flüssigen und semiflüssigen Materialien (Zytoplasma etc.) in den Zustand eines Festkörpers zu überführen. Erst dadurch werden Manipulationen an und in Zellen möglich, die bei physiologischen Temperaturen unabdingbar zum Verlust der Vitalität führen würden oder aus Zeitgründen unmöglich sind. Die Überführung der Zellen in den Festkörperzustand ermöglicht es, lebende Systeme nahezu ohne zeitlichen Druck und unter Beibehaltung der Vitalität in wesentlichem Maße zu verändern und wird im folgenden unter dem Begriff "Tieftemperatur-Zytochirurgie" zusammengefaßt.

Bevorzugte Ausführungsbeispiele der Erfindung werden nachfolgend unter Bezugnahme auf die beiliegenden Figuren näher erläutert.

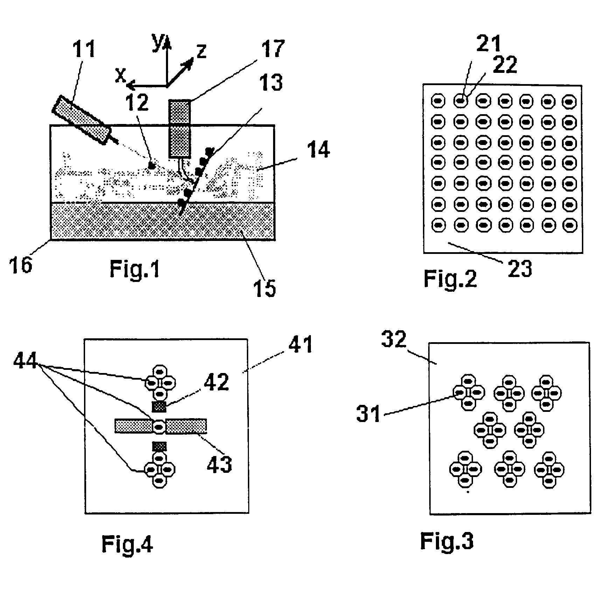

**Figur 1** zeigt den schematischen Aufbau der Vorrichtung im Schnitt. Aus einer Mikrotropfenschußvorrichtung (11) werden jeweils einzelne oder wenige Zellen mit einer Umhüllungslösung (12) in Mikrotropfen verschossen, die durch die Gasphase (14) mit hoher Geschwindigkeit gezielt auf die Substratoberfläche (13) auftreffen. Das Substrat (13) wird durch eine Kryoflüssigkeit (15), die sich in einem Gefäß (16) befindet, auf eine Temperatur T₁ gebracht, die in der Regel weit unterhalb des Gefrierpunktes des Umgebungslösungsmittels liegt. Die Substrat-Kühlanordnung wird so mit der Mikrotropfenschußvorrichtung (11) kalibriert, daß die Mikrotropfen beim Auftreffen auf die Substratoberfläche (13) anhaftend gefrieren, ohne daß die Mikritropfen zerplatzen und wesentlich an Volumen verlieren. Je tiefer die Temperatur T₁ gewählt wird, umso rascher erfolgt auch der Gefriervorgang der im Tropfen befindlichen Zelle. Dieser Prozess kann zusätzlich noch über die Mikrostrukturierung der Substratoberfläche beeinflußt werden (z.B. Vergrößerung der Oberfläche).
   Bei Tropfengrößen (Nährlösung) von etwa 50 µm Durchmesser erfolgt eine Abkühlung auf ca.-100 °C bei einer Temperatur T₁ = -196 °C im ms-Bereich und schneller. Damit lassen sich für die Kryokonservierung von Zellen nahezu alle Temperaturprogramme, die bisher angewendet werden, mittels der Variation der Substrattemperatur T₁, aber auch der Oberflächenstruktur und Eigenschaften (T-Leitfähigkeit) verwirklichen.
   Um die Mikrotropfen und damit auch die zu konservierenden Zellen in arrayartigen Anordnungen aufzubringen, wird entweder das Substrat (13) oder/und die Mikrotropfenschußvorrichtung (11) zueinander verschoben oder aber werden die Mikrotropfen während des Fluges durch die Gasphase abgelenkt.
   Nach dem Aufbringen der Mikrotropfen wird das Substrat (13) auf eine Temperatur T₃ gebracht, bei der es weiter bearbeitet, z.B. mittels einer mechanischen Bearbeitungsmittels (17), oder Temperatur T₂ gelagert werden soll. In der Regel ist das die Temperatur der Kryobanken, wie sie üblicherweise für die Zellagerung Anwendung findet (-80 bis -273°C).
   Beim Auftauen kann wiederum die skizzierte Vorrichtung in der folgenden Modifizierung verwendet werden: Statt des Kühlmittels(15) wird das Substrat (13) entweder durch eine direkt anhaftende Vorrichtung (Thermistor oder anderes lokales Heizelement) oder über eine warme Flüssigkeit auf eine Temperatur T₁ gebracht, die in der Regel oberhalb des Gefrierpunktes der Umhüllungslösung liegt. Der Prozeß der Erwärmung kann durch Aufschießen von warmen Mikrotropfen aus der Mikrotropfenschußvorrichtung (11) unterstützt werden (z.B. Nährlösung). In Frage kommen jedoch auch andere Erwärmungsarten, bis hin zu Mikrowellen, Infrarot(laser)strahlung, oder induktives Heizen des Substrates. Auch dieser Prozeß kann in gut steuerbaren Etappen, und falls erforderlich, in sehr kurzer Zeit absolviert werden.
Die folgenden **Figuren 2 bis 16** zeigen mikroskopische Ausschnitte der Substratoberfläche in Schnittansichten. Die Abmessungen der dargestellten Strukturen betragen einige Mikrometer bis zu einigen Millimetern, vorzugsweise einige 10 Mikrometer. Sie können aber auch im Submikrometerbereich liegen, z.B. für die Anwendung bei Makromolekülen.
**Figur 2, Figur 3 und Figur 4** sind Darstellungen möglicher Anordnungen von Mikrotropfen (22,31,44) auf der Substratoberfläche (23,32,41). **Figur 2** zeigt ein quadratisches Array mit jeweils zueinander getrennt aufgebrachten Mikrotropfen (7*7=49) (22) in denen sich jeweils eine Zelle (21) befindet. **Figur 3** zeigt ein Array von 8 Viereraggregaten sich berührender Mikrotropfen (31) mit jeweils einer Zelle. **Figur 4** zeigt zwei Viereraggregate und einen Einzeltropfen (44) zwischen Strukturelementen (42,43), die der Vermessung oder mechanischen Abgrenzung dienen. Die mit (43) bezeichneten Elemente können z.B. Elektroden sein, die auch im tiefgefrorenen Zustand Meßsignale liefern. Die mit (42) bezeichneten Elemente können z.B. Temperaturfühler sein. Die Größe der dargestellten Elemente liegen im Submikro- und Mikrometerbereich.

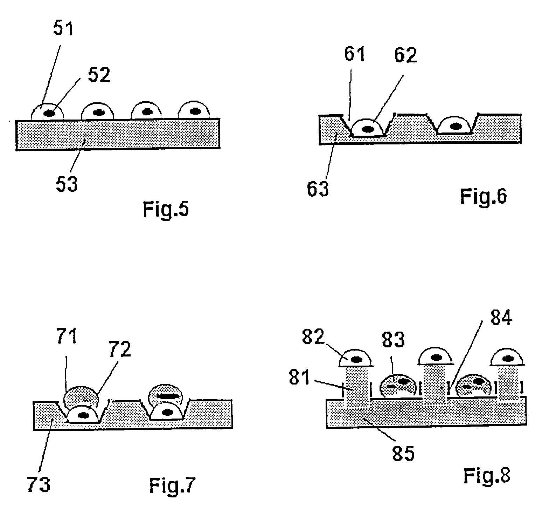

**Figur 5** zeigt ein Substrat (53) ohne Oberflächenstrukturierung im Schnitt. Es kann sich dabei um einen Glas-, Plastik-, Keramik-, Halbleiter- oder Metallträger handeln. Die aufgeschossenen Mikrotropfen (51) enthalten jeweils eine Zelle, eine Zellorganelle oder ein Zellaggregat (52). Je nach gewählter Temperatur T₁ wird der Mikrotropfen von seiner ursprünglichen Form abweichend gefrieren. Erfindungsgemäß kann nach Positionierung der Mikrotropfen ein Vakuumbearbeitungsschritt durchgeführt werden, bei dem die Substratoberfläche mit den Tropfen einem Unterdruck ausgesetzt wird, der so ausgewählt ist, daß das Umhüllungslösungsmittel je nach der Temperatur T₁ schrittweise abdampfen oder sublimieren kann.
**Figur 6** zeigt ein Substrat (63) im Schnitt mit Mikrostrukturierungen (etwa tropfengroße Vertiefungen (61)), in die jeweils ein Mikrotropfen (62) aufgeschossen worden ist.
**Figur 7** zeigt eine Anordnung, wie sie in **Figur 6** beschrieben ist (Substrat (73), Mikrotropfen mit Zelle (72)). Im Unterschied zu oben ist hier ein zweiter Mikrotropfen (71) auf jeden Mikrotropfen aufgeschossen worden. Dieser Tropfen (71) kann eine Zelle enthalten, bzw. auch aus einem anderen Lösungsmittel bestehen. Je nach Tiefe der Strukturierung oder Wahl der Temperatur T₁ können zwei oder mehrere Mikrotropfen übereinander plaziert werden. Es lassen sich Tropfensäulen von bis zu 50 Tropfen erzeugen, die in gefrorenem Zustand mechanisch stabil bleiben.
**Figur 8** zeigt einen Schnitt durch eine stark strukturierte Oberfläche (85), in deren Vertiefungen sich Mikrotropfen mit Zellen (83) zwischen Elektroden (84) befinden. Auf den Stegen (81) sind ebenfalls Mikrotropfen mit gleichartigen oder unterschiedlichen Zellen (82), z.B. in einer anderen Lösung aufgebracht. Diese Anordnung entspricht schon in ihren Grundzügen einem vorbereiteten Testchip, wie er für das Pharma- oder Schadstoff-Screening verwendet werden kann. Erst nach dem Auftauen und dem Aufbringen eines die gesamte Oberfläche benetzenden Lösungsmittels treten die beiden Zellarten in Kontakt bzw. werden aktiviert. Die Zell-Zell-Wechselwirkungen werden über die Mikroelemente (84) detektiert.

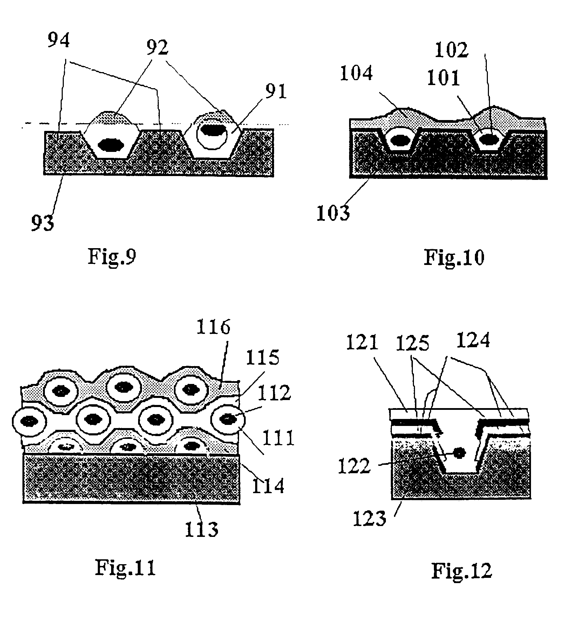

**Figur 9** zeigt den Schnitt durch ein Substrat (93) mit Vertiefungen, die durch Wälle definierter Höhe (94) begrenzt werden. Die Wälle sind so flach, daß die Mikrotropfen (91) über die Oberflächenebene (Strichellinie) des Substrates (93) mit einem Teil (92) herausragen. Letzterer kann z.B. mittels mikromechanischer Vorrichtungen (ähnlich einem Mikrotom) im tiefgefrorenen Zustand abgetrennt, abgefräst, abgeschnitten oder aber auch mit Hilfe eines Laserstrahles ablatiert oder abgesprengt werden. Dabei kann es durchaus erwünscht sein, auch Teile des Zellinnere freizulegen, Material aufzubringen (z.B. genetisches), Material abzutragen (z.B. den Zellkern) und/oder durch weiters Aufbringen, z.B. von Lipiden , Polymeren u.ä. die Voraussetzungen zu schaffen, die Zellen während und nach dem Auftauen wieder zu verschließen, ggf. auch unter Beibehaltung der Vitalität der Zellen. Dieses Verfahren ist neben anderem als Ausgangspunkt für eine Tieftemperatur-Zytochirurgie zu betrachten.
**Figur 10** zeigt den Schnitt durch ein Substrat (103) mit Vertiefungen, in denen sich jeweils ein Mikrotropfen (101) mit Zelle (102) befindet. Das System ist mit einer Schicht (104) überdeckt. Das können sehr dünne Filme (molekulare Abmessungen) sein, die der mechanischen Stabilisierung, der Beeinflussung der Lösungszusammensetzung beim Auftauen, als Verdunstungschutz oder aber der Herausbildung einer Grenzfläche (hydrophil/hydrophob) dienen. Es kann jedoch auch ein Material sein, mit dessen Hilfe nach dem Auftauen die Zellen an einem dünnen Film (104) haftend entnommen werden können. Desweiteren sind Schichten im Mikrometerbereich denkbar.
**Figur 11** zeigt den Schnitt durch ein Substrat (113), bei dem schichtförmig Mikrotropfen (111) mit jeweils einer Zelle (112) aufgebracht und mit Schichten (111, 115, 116) bedeckt werden. Es kann sich hierbei um gleichartige oder unterschiedliche Schichten, Mikrotropfen oder Zellen handeln. Dieses Verfahren dient z.B. dem nachträglichen Aufbringen von Kryoprotektanten für den Auftauprozess. Da diese Substanzen häufig zellschädigende Wirkungen entfalten und erst beim Auftauen benötigt werden, kann im tiefgefrorenen Zustand noch keine Wechselwirkung mit der Zelle auftreten. Auf diese Weise lassen sich höhere Überlebensraten der Zellen erreichen.
**Figur 12** zeigt den Schnitt durch ein Substrat (123) mit einer Vertiefung, in die ein Mikrotropfen mit Zelle (122) aufgebracht wurde, nach dem Auftauen. Die Zelle (122) wird über die Elektroden (124), die über eine Isolierschicht (125) zueinander elektrisch isoliert sind, in einem Feldkäfig in freier Lösung (121) levitiert und ggf. vermessen. Mit ähnlichen Mikroelementen lassen sich die Zellen nach dem Auftauen auf dem Substrat bewegen oder in definierter Position halten.

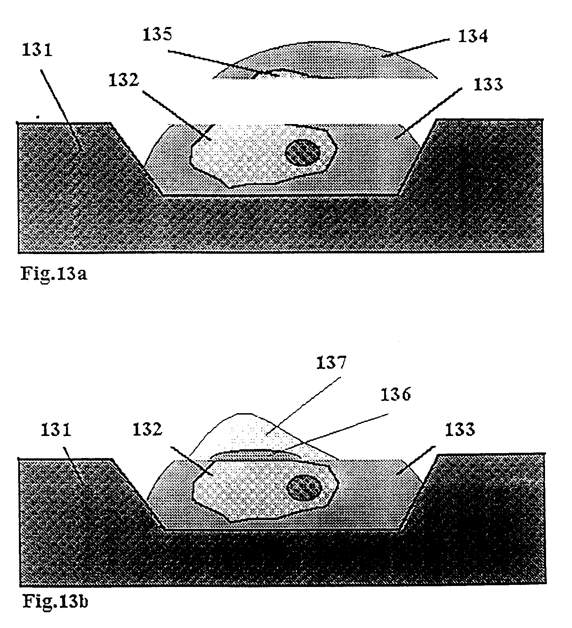

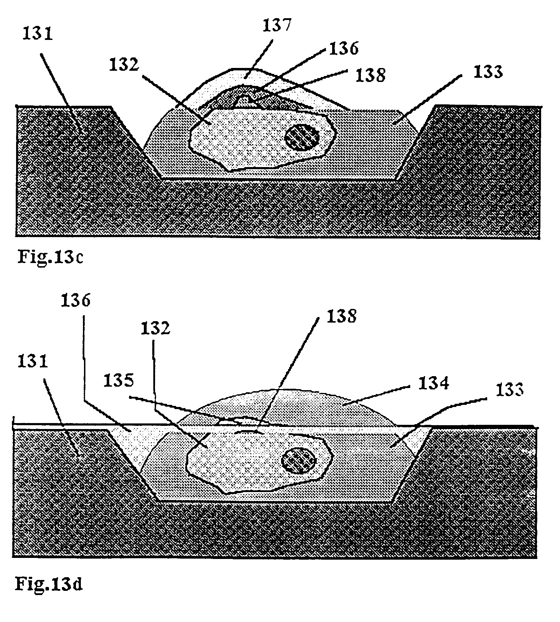

**Figur 13a** zeigt in vergrößerter Schnittdarstellung eine Grube in einem Substrat (131), in der sich ein Mikrotropfen (133,134) befindet, in dem eine Zelle (132) in tiefgefrorenem Zustand kryokonserviert ist. Bei einer geeigneten Temperatur unterhalb des Gefrierpunktes der Umhüllungslösung und evt. der Zelle kann mit einem mechanischen oder anders gearteten Mikroschneidegerät (planer Schleifkörper) die Tropfenkappe und ein Teil der Zelle (134,135) abgehoben werden. Die Höhe des Schnittes wird durch die Tiefe der Grube bestimmt. Die Größenordnung der Schnittfläche, zum Beispiel einer biologischen Zelle, kann typischerweise einige µm² betragen. Es sind jedoch auch kleinere Öffnungen oder Öffnungen im Bereich 10 bis 100 µm² denkbar. Im einfachsten Fall wird die entfernte Tropfenkappe verworfen und eine oder mehrere dünne Schichten auf die Schnittoberfläche aufgebracht, wie es in **Figur 13b** dargestellt ist. Die Oberfläche der Zelle wird etwas über die Begrenzung derselben, mit einer Lösung (136) bedeckt, die z.B. lipophile Eigenschaften aufweisen kann oder einer Lipidbi- oder multilayer entspricht. Es ist ebenfalls möglich, dünne Filme entsprechender Substanzen dicht schließend, lokal oder breitflächig aufzubringen. Zur weiteren Stabilisierung der Schichtenfolge beim Auftauen können weitere Schichten (137), z.B. auch in hydrophiler-hydrophober Folge, aufgebracht werden. Das Aufbringen der Schichten und Lösungen kann mittels der bereits beschriebenen Mikrotropfenschußvorrichtungen erfolgen, aber auch durch Aufnebeln, Niederschlag aus der Gasphase etc. bewerkstelligt werden. Auf diese Weise ist eine angemessene Dosierung und partielle Bedeckung gewährleistet. Beim Auftauen tritt über die Wechselwirkung bzw. Durchdringung der Schichten als auch die gestaffelten Auftautemperaturen eine Stabilisierung der Grenzflächen ein, so daß die vorher mechanisch geöffneten Zellen, unter Beibehaltung ihrer Vitalität verschlossen werden.
In **Figur 13c** ist neben den in **Figur 13b** genannten Schichten (136,137) zuvor ein Mikrotropfen (138) auf die geöffnete Zelloberfläche oder in deren Nähe gebracht worden, der eine Substanz enthält, die in den Zellmetabolismus gelangen soll. Das können genetisches Material, Makromoleküle, Markierungssubstanzen, Isotope aber auch künstliche Körper sein.
**Figur 13d** zeigt das Aufbringen eines Lösungstropfens (138), wie er in **Figur 13c** beschrieben ist. Danach wird die gesamte Oberfläche des Substrates mit einer Lösung (136) bedeckt, die auffriert und beim Auftauen die geordnete Verbindung zu der danach aufgesetzten Zellkappe (135) und den ursprünglichen Teil des Mikrotropfens (134) herstellt. Alle Schritte erfolgen im gefrorenen Zustand, wobei in der Regel Temperaturen unter -80°C zweckmäßig sind, da hier kein migratorisches Wachstum von Eiskristallen mehr erfolgt.

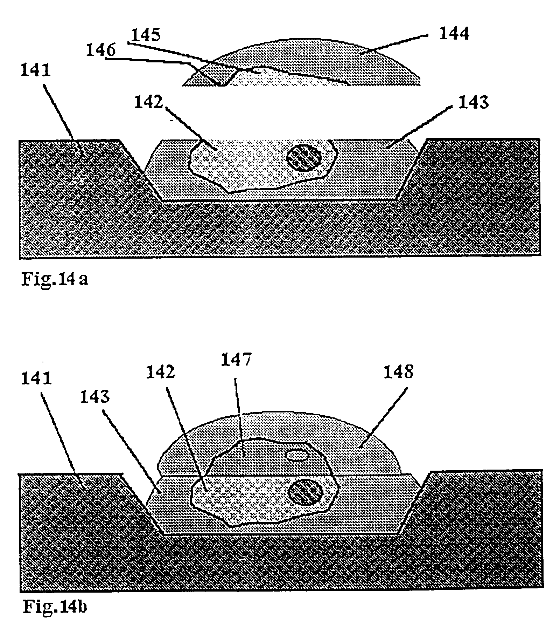

In **Figur 14a** ist das Abheben eines größeren Teiles (144) eines aufgefrorenen Mikrotropfens(143) und der darin befindlichen Zelle (142, 145) gezeigt. Die Schnitthöhe wird durch die Höhe des Walles (141) festgelegt, auch die Zellwand und Membran (146) wird mikroskopisch fein durchschnitten. Im Unterschied zu **Figur 13** wird hier jedoch der abgehobene Teil (144,145,146) nicht verworfen, sondern zum Aufsetzen auf einen anderen, ähnlich behandelten Mikrotropfen weiter verwendet. Das Resultat einer solchen Manipulation aus zwei Zellteilen (142,147) und Tropfenteilen (143,148) ist in **Figur 14b** im Schnitt gezeigt. Zum besseren Verschmelzen beider Teile kann es erforderlich werden, weitere Schichten an der Verbindungsfläche beider Mikrotropfen vor dem Aufsetzen aufzubringen, die das Verschließen evt. verbleibender Öffnungen bewerkstelligen (hier nicht dargestellt). Die elliptischen Kreise in den Zellen, veranschaulichen Zellorganellen.

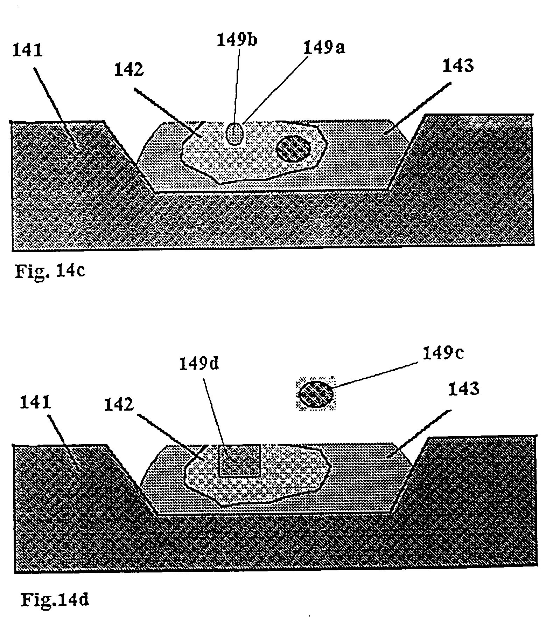

**Figur 14c** und **d** veranschaulichen zwei weitere Manipulationsarten von zellbiologischer und medizinischer Relevanz. Einmal die Entfernung eines Mikrovolumens (149a) aus dem Zellmaterial und das Einfügen einer Organelle, eines künstlichen Körpers oder eines anderen Zellkompartiments (149b). Zum anderen die Entfernung eines Zellkompartiments (hier dargestellt als Entfernung des Zellkernes (149c)) und Ersatz des entfernten Volumens durch eine fremde Substanz (149d), die in der Regel physiologisch verträglich sein sollte oder auch anderen zellulären Ursprungs sein kann. Es kann sich dabei aber auch um einen Festkörper, oder ein Gasraum handeln, der vom Zellinnenraum nach dem Auftauen toleriert wird. Anwendungsgebiete dieser Manipulationsverfahren sind die Genetik, Molekularbiologie, Biotechnologie und Medizin.
**Figur 15a** veranschaulicht das Öffnen einer Zelle, wie bereits beschrieben, die Entnahme eines Teiles des Zellmaterials und das Einfügen anderen Materials (157) und einer kompletten Zelle (156), z.B. einer Bakterienzelle, einzelligen Alge. Mit (158) sind die Zellorganellen, mit (152) der Zellkörper, mit (153) der Tropfenteil auf dem Substrat, mit (151) der Wall des Substrates und mit (155) der abgetrennte Zellteil, mit (154) der abgetrennte Tropfenteil bezeichnet.

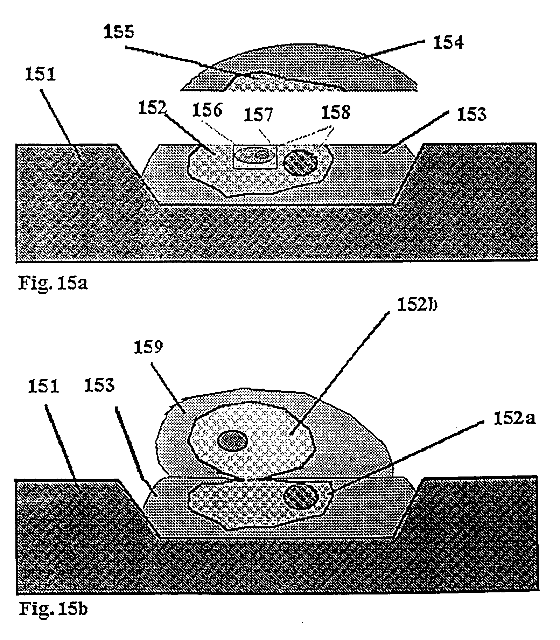

In **Figur 15b** ist veranschaulicht, daß die Verletzung- und Berührungsfläche zwischen zwei auf diese Weise aufeinandergesetzten Tropfen- (153,159) und Zellteilen (152a, 152b) sehr kleinflächig sein kann (Mikrometer- oder sogar Submikrometerbereich). Ziel dieser Manipulation ist die Bildung eines Zellpaares, eines Zellfusionates (nach dem Auftauen), oder einer temporären oder dauerhaften Zellverbindung. Anwendungen liegen vor allem in der Hybridomatechnik.
**Figur 16a** zeigt das Resultat der folgenden Verfahrensschritte im Schnittbild: Tropfenmaterial (162) wird auf die bereits beschriebene Weise oberhalb des Substrates (161) entfernt, allerdings so, daß die Zelloberfläche freigelegt aber nicht verletzt wird. Auf die freigelegte Fläche der Zelle (163) werden lokal feinst dosiert Materialien (165) aufgebracht, z.B. durch gezielten Mikrotropfenbeschuß und augenblickliches Auffrieren. Diese Materialien können genetische Moleküle, Bindungsproteine, Enzyme, Markermoleküle, Salze etc. enthalten, die während oder nach dem Auftauen an der Oberfläche ankoppeln, anhaften oder in die Zelle oder die wandnahen Bereiche eindringen sollen. Zur Stabilisierung und Unterstützung der Auftauprozesse kann es erforderlich sein, weitere Schichten (hier mit (164) bezeichnet), auch in größerer Dicke, aufzubringen. Auch mit diesen Verfahrensschritten ist eine medizinische, biotechnologische oder umweltsensortechnische Anwendung angestrebt. So kann sich die Zelle in einem Sensorchip befinden und die Testung des Einflußes von Umweltnoxen nach dem Auftauen verfolgt werden, in dem Zellparameter gemessen werden. In diesem Zusammenhang ist nochmals zu erwähnen, daß die genannten Prozesse auch durch Hohlräume unterstützt werden können, die durch Brückenbildung über dem Tropfenmaterial oder der Zelle erzeugt werden.

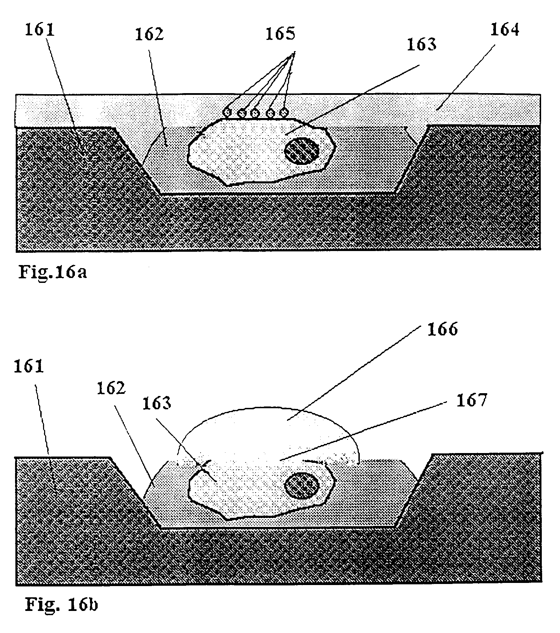

**Figur 16b** veranschaulicht einen weiteren Verfahrensschritt zur Bearbeitung eines Mikrotropfens (162) und der darin befindlichen tiefgefrorenen Zelle (163). Genutzt wird der Umstand, daß ein auf das tiefgefrorene Tropfen- oder Zellmaterial aufgeschossener Flüssigkeitstropfen (166) nicht gefriert, ohne einen Teil des gefrorenen Materials (163, 162), auf das er trifft, kurzzeitig zu verflüssigen. Wie groß dieser Materialbereich (167) wird, hängt von der Substrattemperatur aber auch von der Tropfentemperatur und den Volumina beider Mikrotropfen ab. Bei sehr tiefen Temperaturen des Substrates und Temperierung des Mikrotropfens (166) nahe dem Gefrierpunkt, liegt der Auftaubereich (167) in molekularer Dimension, bei Substrattemperaturen etwas unterhalb des Gefrierpunktes und hohen Mikrotropfentemperaturen, bei wässrigen Lösungen bis zu 100 °C, sind es mikroskopische Dimensionen, bis hin zur Substratoberfläche. Beides wird genutzt, um in definierter Weise Mischphasen, molekulare und mikroskopische Umstrukturierungen oder Anheftprozesse auf der Substratoberfläche zu bewerkstelligen.

Die hier am Beispiel biologischer Objekte erläuterten Verfahrensschritte und Vorrichtungen können ebenfalls auf dem Gebiet der mikrotopografisch, multikompartimentierten Reaktionschemie angewendet werden.

## Patentansprüche

1. Verfahren zum Kryokonservieren und zur Tieftemperaturbehandlung von mikroskopischen Objekten, insbesondere biologischen Objekten, von Zellverbänden, einzelnen Zellen oder Zellbestandteilen, auf Substratoberflächen mit den Schritten:
- Einbringung der Objekte in mindestens ein Vorratsreservoir mit einem Umhüllungslösungsmittel,
- Führung der Objekte von dem mindestens einen Vorratsreservoir auf ein die Substratoberfläche bildendes, temperierbares Substrat-Target der Temperatur T₁, und
- lagefixiertes Anhaften der Objekte auf dem Substrat-Target,
**dadurch gekennzeichnet**, daß
bei der Führung die Objekte vom Umhüllungslösungsmittel derart umgeben sind, daß Mikrotropfen gebildet werden, wobei die Führung durch eine Mikrotropfenplazierungseinrichtung erfolgt, die dazu vorgesehen ist, die Bewegung der Mikrotropfen mit den Objekten zeitlich und räumlich zu steuern, und nach dem Anhaften die Targettemperatur auf eine Konservierungstemperatur T₂ oder eine Bearbeitungstemperatur T₃ eingestellt und das beschickte Substrat-Target gelagert und/oder bearbeitet wird.

2. Verfahren gemäß Anspruch 1, bei dem die Mikrotropfenplazierungseinrichtung eine Mikrotropfenschußeinrichtung ist und die Führung der Objekte durch eine jeweils von Schuß zu Schuß geänderte Ausrichtung der Mikrotropfenbewegung in Bezug auf das Target und/oder Bewegung des Targets in Bezug auf die Mikrotropfenschußeinrichtung derart gesteuert wird, daß die Objekte in definierten Abständen oder in Mustern auf der Oberfläche anhaften.

3. Verfahren gemäß Anspruch 1 oder 2, bei dem mit mehreren Mikrotropfenschußeinrichtungen gleichzeitig oder nacheinander Objekte auf eine oder mehrere Targetstellen geschossen werden.

4. Verfahren gemäß einem der Ansprüche 1 bis 3, bei dem die Temperatur T₁ oberhalb des Gefrierpunkts von Wasser und Temperaturen T₂ und T₃ im Bereich von -2°C bis -273°C liegen.

5. Verfahren gemäß Anspruch 4, bei dem die Oberfläche des Substrat-Targets vor der Beschickung mittels einer Mikrotropfenschußeinrichtung partiell oder vollständig mit einem Gel, einer molekularen Schicht, einer Flüssigkeit oder einem Polymer oder aber einer Vielzahl oder Kombination aus diesen überzogen wird.

6. Verfahren gemäß einem der Ansprüche 1 bis 3, bei dem die Temperaturen T₁, T₂ und T₃ im Bereich von -5°C bis -273°C liegen.

7. Verfahren gemäß einem der Ansprüche 1 bis 6, bei dem die Objekte und Mikrotropfen während des Fluges auf die Oberfläche des Substrat-Targets optisch oder elektrisch vermessen werden, wobei die Auftreffposition des Mikrotropfens mit den Objekten in Abhängigkeit von den bei der Vermessung erhaltenen Daten variiert werden kann.

8. Verfahren gemäß einem der Ansprüche 1 bis 7, bei dem die Lagerung und/oder Bearbeitung des beschickten Substrat-Targets in flüssigem Stickstoff oder ähnlichen Kryoflüssigkeiten oder deren Gasphasen erfolgt.

9. Verfahren gemäß den Ansprüchen 1 bis 8, bei dem das gesamte Verfahren oder auch einzelne Arbeitsabschnitte bei vom Normaldruck abweichenden Drucken erfolgen.

10. Verfahren gemäß einem der Ansprüche 1 bis 9, bei dem das beschickte Substrat-Target vor der Lagerung und/oder Bearbeitung mit weiteren dünnen Schichten überzogen wird, wobei die dünnen Schichten z.B. durch mit einer Mikrotropfenschußeinrichtung aufgebrachte gefrorene Lösungen gebildet oder beispielsweise durch Vernebeln, Aufsputtern in einer Gasphase oder Niederschlag im Vakuum z.B. eines metallischen Materials, erzeugt werden.

11. Verfahren gemäß einem der Ansprüche 1 bis 10, bei dem die Objekte im aufgebrachten Zustand gefriergetrocknet werden.

12. Verfahren gemäß einem der Ansprüche 1 bis 11, bei dem mehrere Mikrotropfen mit oder ohne Zellen, gleicher oder verschiedener Zusammensetzung übereinander plaziert und angefroren oder nebeneinander aufgebracht werden.

13. Verfahren gemäß einem der Ansprüche 1 bis 12, bei dem zur Lagerung und/oder Bearbeitung auf die Substratoberfläche eine Schicht aufgebracht wird, mit der die Mikrotropfen mit den Zellen oder Teile davon lagefixiert durch Abziehen abhebbar sind.

14. Verfahren gemäß einem der Ansprüche 1 bis 13, bei dem die Zellen vor dem Einfrieren und/oder nach dem Auftauen durch Erwärmung des Targets bis zu einer Temperatur oberhalb des Gefrierpunktes der Umhüllungslösung über elektrische Feldkräfte manipuliert oder schwebend in der Umgebungslösung gehalten werden.

15. Verfahren zur Tieftemperaturbehandlung von mikroskopischen Objekten, insbesondere biologischen Objekten von Zellverbänden, einzelnen Zellen oder Zellbestandteilen, auf Substratoberflächen **gekennzeichnet durch** die Schritte:
- lagefixiertes Anhaften der Objekte auf der Substratoberfläche im gefrorenen Zustand, und
- Bearbeiten der Objekte durch Entfernung von Objektmaterial.

16. Verfahren gemäß Anspruch 15, bei dem die Objekte biologische Zellen oder Zellverbände oder Zellbestandteile umfassen und beim Bearbeiten Zellmaterial abgetragen wird.

17. Verfahren gemäß Anspruch 15 oder 16, bei dem die Entfernung oder Abtragung von Material ein mechanisches Abtragen, eine optische Abblation, ein Gefrierätzen und/oder ein Abdampfen im Vakuum umfaßt.

18. Verfahren gemäß einem der Ansprüche 15 bis 17, bei dem in einem weiteren Schritt Zusatzmaterial aufgebracht und/oder ausgetauscht wird, wobei das Zusatzmaterial synthetischen, genetischen oder zellulären Ursprungs ist oder dazu vorgesehen ist, beim oder nach einem Auftauen der Objekte zu einem Verschließen der teilweise abgetragenen Objekte unter Erhalt ihrer Vitalität zu führen.

19. Verfahren gemäß einem der Ansprüche 15 bis 18, bei dem das lagefixierte Anhaften durch ein Verfahren gemäß einem der Ansprüche 1 bis 14 erfolgt.

20. Vorrichtung zum Kryokonservieren und Tieftemperaturbearbeiten von mikroskopischen Objekten, insbesondere biologischen Objekten, von Zellverbänden, einzelnen Zellen oder Zellbestandteilen, auf Substratoberflächen, **gekennzeichnet** durch eine Mikrotropfenschußeinrichtung zum zeitlichen und räumlich gesteuerten Aufschießen von Umhüllungslösungstropfen mit den von diesen umhüllten biologischen Objekten auf ein temperierbares Substrat-Target, das die Substratoberfläche bildet.

21. Vorrichtung gemäß Anspruch 20, bei der Bearbeitungsmittel zum Lagern und/oder Manipulieren der aufgebrachten Objekte vorgesehen sind.

22. Vorrichtung gemäß Anspruch 20 oder 21, bei der das Substrat-Target eine Oberflächenstruktur besitzt, die insbesondere Mikroelektroden, elektronische Sensor- oder Bauelemente, Vertiefungen, Erhebungen, Durchbrüche oder Kanäle oder feine Strukturen, wie Riffeln, Säulen, Spitzen, Wälle, die die Oberfläche vergrößern, mit typischen Abmessungen im Mikrometer(µm)- oder Submikrometer-Bereich enthält.

23. Vorrichtung gemäß einem der Ansprüche 20 bis 22, bei der die Mikrotropfenschußeinrichtung oder/und das Substrat-Target aus einem Halbleitermaterial bestehen, insbesondere siliziumbasiert sind.

24. Vorrichtung gemäß einem der Ansprüche 20 bis 23, bei der das Substrat-Target beim Aufschießen eine Temperatur T₁ über dem Gefrierpunkt des Wassers besitzt und nach dem Aufschießen auf eine Konservierungstemperatur T₂ im Bereich von -5°C bis -273°C abkühlbar und temperierbar ist, wobei das Substrat-Target nach zeitlich festgelegten Temperaturprogrammen abgekühlt oder/und erwärmt werden kann und zum Beispiel durch ein Kühlmittel-Bad, das insbesondere flüssigen Stickstoff enthält, oder die Gasatmosphäre des Kühlmittel-Bades kühlbar ist.

25. Vorrichtung gemäß einem der Ansprüche 20 bis 24, bei der das Bearbeitungsmittel eine Mikrotomschneide, eine Mikrobohr- und Fräsmaschine, einen Laserstrahl oder ein anderes Element enthält, mit dem mechanisch, thermisch oder optisch Material im tiefgefrorenen Zustand der Mikrotropfen oder Zellen entfernt oder abgehoben wird.

26. Vorrichtung gemäß einem der Ansprüche 20 bis 25, bei der die Substrattemperatur und die Tropfentemperatur unabhängig voneinander eingestellt werden können und für den zu schießenden Mikrotropfen auch weit oberhalb des Gefrierpunktes der Tropfenlösung liegen kann.

27. Vorrichtung zur Tieftemperaturbehandlung von mikroskopischen Objekten, insbesondere biologischen Objekten, Zellverbänden, einzelnen Zellen oder Zellbestandteilen, auf Substratoberflächen, **gekennzeichnet durch**
- Mittel zur Einstellung der Substrattemperatur derart, daß die Objekte lagefixiert im gefrorenen Zustand auf der Substratoberfläche anhaften, und
- Bearbeitungsmittel, die zum Abtrag von Objektmaterial vorgesehen sind.

28. Vorrichtung gemäß Anspruch 27, bei der die Bearbeitungsmittel eine Mikrotomschneide, eine Mikrobohr- und Fräsmaschine, einen Laserstrahl oder ein Element enthält, mit dem mechanisch, thermisch oder optisch Material in tiefgefrorenem Zustand entfernt oder abgetragen werden kann.

29. Verwendung des Verfahrens oder der Vorrichtung gemäß einem der Ansprüche 1 bis 28 zur Kryokonservierung von Zellen für eine medizinische, biologische, pharmazeutische oder anderweitig nutzbare Zellbank oder zur Herstellung von Substraten als Testchip, Sensor, Screening-Element in der medizinischen Diagnostik, Umwelttechnik und pharmazeutischen Forschung.

## Claims

1. A method of cryo-preservation and of low temperature treatment of microscopic objects, especially biological objects, cell formations, individual cells or cell components, on substrate surfaces with the steps:
- introducing the objects to at least one storage reservoir with an enveloping solvent,
- guiding the objects from the at least one storage reservoir on to a substrate target, whose temperature can be controlled, forming the substrate surface, at the temperature T₁ and
- effecting positionally fixed adherence of the objects on the substrate target,
characterized in that during the guiding the objects are so enveloped by the enveloping solvent that micro-drops are formed, the guiding being effected through a micro-drop placement device, which is arranged to control the movement of the micro-drops with the objects in time and space, and
after the adherence the temperature is adjusted to a preserving temperature T₂ or a treatment temperature T₃ and the loaded substrate target is stored and/or treated.

2. A method according to claim 1, in which the micro-drop placement device is a micro-drop firing device and the guiding of the objects is so controlled by an alignment of the micro-drop movement changed from shot to shot relative to the target and/or movement of the target relative to the micro-drop firing device that the objects adhere to the surface at defined distances or in patterns.

3. A method according to claim 1 or 2, in which objects are fired simultaneously or sequentially on to one or more target sites with a plurality of micro-drop firing devices.

4. A method according to any of claims 1 to 3, in which the temperature T₁ lies above the freezing point of water and the temperatures T₂ and T₃ lie in the range from -2°C to -273°C.

5. A method according to claim 4, in which the surface of the substrate target is partially or completely coated with a gel, a molecular layer a liquid or a polymer or a plurality or combination thereof before the loading by means of a micro-drop firing device.

6. A method according to any of claims 1 to 3, in which the temperatures T₁, T₂ and T₃ lie in the range from -5°C to -273°C.

7. A method according to any of claims 1 to 6, in which the objects and micro-drops are measured optically or electrically during the flight on to the surface of the substrate target, whereby the point of impingement of the micro-drop with the objects can be varied in dependence on the data obtained from the measurement.

8. A method according to any of claims 1 to 7, in which the storage and/or treatment of the loaded substrate target is effected in liquid nitrogen or similar cryo-liquids or their gaseous phases.

9. A method according to any of claims 1 to 8, in which the whole method or individual working stages take place at pressures deviating from normal pressure.

10. A method according to any of claims 1 to 9, in which the loaded substrate target is coated with further thin layers before the storage and/or treatment, wherein the thin layers are formed for example by frozen solutions applied by a micro-drop firing device or are created for example by atomization, sputtering in a gaseous phase or deposition in vacuum of a metallic material for example.

11. A method according to any of claims 1 to 10, in which the objects are freeze dried in the applied state.

12. A method according to any of claims 1 to 11, in which a plurality of micro-drops with or without cells, of the same or different composition, are placed one after the other and frozen or are applied beside one another.

13. A method according to any of claims 1 to 12, in which a layer is applied on the substrate surface for the storage and/or treatment, with which the micro-drops with the cells or parts thereof fixed in position can be lifted off by peeling away.

14. A method according to any of claims 1 to 13, in which the cells are manipulated or held floating in the ambient solution by electrical field forces before the freezing and/or after the thawing by warming the target up to a temperature above the freezing point of the enveloping solution.

15. A method of low temperature treatment of microscopic objects, especially biological objects of cell formations, individual cells or cell components, on substrate surfaces, characterized by the steps:
- positionally fixed adherence of the objects on the substrate surface in the frozen state, and
- treating the objects by removal of object material.

16. A method according to claim 15, in which the objects comprise biological cells or cell formations or cell components and cell material is eroded in the treatment.

17. A method according to claim 15 or 16, in which the removal or erosion of material comprises a mechanical erosion, an optical ablation, a freeze etching and/or evaporation in a vacuum.

18. A method according to any of claims 15 to 17, in which additional material is applied and/or exchanged in a further step, wherein the additional material is of synthetic, genetic or cellular origin or is provided for occluding the partially eroded objects with retention of their vitality during or after thawing the objects.

19. A method according to any of claims 15 to 18, in which the positionally fixed adherence is effected by a method according to any of claims 1 to 14.

20. Apparatus for cryo-preservation and low temperature treatment of microscopic objects, especially biological objects, cell formations, individual cells or cell components, on substrate surfaces, characterized by a micro-drop firing device for shooting, under temporal and spatial control, enveloping solution drops with the biological objects enveloped therein on to a substrate target with temperature control, which forms the substrate surface.

21. Apparatus according to claim 20, in which treating means are provided for storing and/or manipulating the applied objects.

22. Apparatus according to claim 20 or 21, in which the substrate target has a surface structure which includes in particular micro-electrodes, electronic sensor or structural elements, pockets, protuberances, apertures or channels or fine structures such as corrugations, columns, spikes, walls, which increase the surface, with typical dimensions in the micrometer (µm) or sub-micrometer range.

23. Apparatus according to any of claims 20 to 22, in which the micro-drop firing device or/and the substrate target consist of a semiconductor material, especially silicon-based.

24. Apparatus according to any of claims 20 to 23, in which the substrate target has a temperature T₁ above the freezing point of water during the firing and can be cooled and temperature-controlled after the firing to a preserving temperature T₂ in the range from -5°C to -273°C, wherein the substrate target can be cooled or/and warmed according to time-determined temperature programmes, and for example can for example by cooled by a coolant bath, which contains liquid nitrogen in particular, or the gaseous atmosphere of the coolant bath.

25. Apparatus according to any of claims 20 to 24, in which the treatment means comprise a microtome cutter, a micro-boring and milling machine, a laser beam or another element, with which material of the micro-drops or cells in the deep frozen state is removed or lifted off mechanically, thermally or optically.

26. Apparatus according to any of claims 20 to 25, in which the substrate temperature and the drop temperature can be adjusted independently of one another and for the micro-drops to be fired can even lie far above the freezing point of the drop solution.

27. Apparatus for low temperature treatment of microscopic objects, especially biological objects, cell formations, individual cells or cell components, on substrate surfaces, characterized by
- means for so adjusting the substrate temperature that the objects are fixed in position on the substrate surface in the frozen state, and
- treatment means which are provided for erosion of object material.

28. Apparatus according to claim 27, in which the treatment means comprise a microtome cutter, a micro-boring and milling machine, a laser beam or another element, with which material in the deep frozen state can be removed or eroded mechanically, thermally or optically.

29. Use of the method or the apparatus according to any of claims 1 to 28 for cryo-preservation of cells for a medical, biological, pharmaceutical or otherwise usable cell bank, or for production of substrates as a test chip, sensor, screening element in medical diagnostics, environmental technology and pharmaceutical research.

## Revendications

1. Procédé de cryoconservation et de manipulation à basse température d'objets microscopiques, en particulier d'objets, d'agglomérations de cellules, de cellules individuelles ou de fractions constitutives de cellules biologiques, sur des surfaces formant substrats, comprenant les étapes consistant à :
- placer les objets dans au moins un réservoir de stockage avec un solvant d'enrobage,
- transférer les objets d'au moins un réservoir de stockage sur un récepteur-substrat de température T_{1,} susceptible d'être amené en équilibre de température, constituant la surface formant substrat, et
- à maintenir les objets immobilisés en position sur le récepteur-substrat, caractérisé en ce que
lors de leur transfert, les objets sont enveloppés par le solvant d'enrobage dans des conditions telles que des microgouttes sont formées, le transfert s'effectuant par l'intermédiaire d'un dispositif de placement de microgouttes qui est prévu pour guider le mouvement des microgouttes portant les objets, dans le temps et dans l'espace et en ce que après l'immobilisation en position, la température du récepteur est fixée à une température de conservation T₂ ou une température de manipulation T₃, et en ce que le récepteur-substrat chargé est stocké et/ou traité.

2. Procédé selon la revendication 1, dans lequel le dispositif de placement des microgouttes est un dispositif de projection de microgouttes et le transfert des objets est guidé par une orientation modifiée, respectivement d'une projection à la projection suivante, de la trajectoire des microgouttes par rapport au récepteur et/ou du déplacement du récepteur par rapport au dispositif de projection de microgouttes, dans des conditions telles que les objets adhèrent sur la surface selon des intervalles d'écartement déterminés ou sous la forme de motifs.

3. Dispositif selon la revendication 1 ou 2, dans lequel des objets peuvent être projetés simultanément ou successivement sur un ou plusieurs emplacements de réception au moyen de plusieurs dispositifs de projection de microgouttes.

4. Dispositif selon l'une des revendications 1 à 3, dans lequel la température T₁ se situe au-dessus du point de congélation de l'eau et les températures T₂ et T₃ se situent dans une fourchette comprise entre -2°C et -273°C.

5. Procédé selon la revendication 4, dans lequel la surface du récepteur-substrat est revêtu, avant chargement, par l'intermédiaire d'un dispositif de projection de microgouttes, partiellement ou en totalité d'un gel, d'une couche moléculaire, d'un liquide ou d'un polymère, ou encore d'une pluralité ou d'une combinaison de ceux-ci.

6. Procédé selon l'une des revendications 1 à 3, dans lequel les températures T₁, T₂ et T₃ se situent dans une fourchette comprise entre -5°C et 273°C.

7. Procédé selon l'une des revendications 1 à 6, dans lequel les objets et les microgouttes sont mesurés par un procédé électrique ou optique durant leur course de projection sur la surface du récepteur-substrat, l'emplacement d'impact de la microgoutte portant les objets pouvant être modifié en fonction des données recueillies lors de la mesure.

8. Procédé selon l'une des revendications 1 à 7, dans lequel le stockage et/ou la manipulation du récepteur-substrat chargé s'effectue dans de l'azote liquide ou des liquides cryogéniques similaires ou dans leurs phases gazeuses.

9. Procédé selon les revendications 1 à 8, dans lequel l'ensemble du procédé ou encore des étapes individuelles de celui-ci s'effectue(nt) à des pressions différentes de la pression atmosphérique standard.

10. Procédé selon l'une des revendications 1 à 9, dans lequel le récepteur-substrat chargé est revêtu, avant stockage et/ou manipulation, d'autres couches minces, les couches minces étant constituées par exemple de solutions réfrigérées appliquées au moyen d'un dispositif de projection de microgouttes ou étant produites par exemple par nébulisation, pulvérisation dans une phase gazeuse ou précipitation sous vide, d'un matériau métallique par exemple.

11. Procédé selon l'une des revendications 1 à 10, dans lequel les objets sont séchés par congélation dans leur état appliqué.

12. Procédé selon l'une des revendications 1 à 11, dans lequel plusieurs microgouttes, avec ou sans cellules, de composition identique ou différente, sont placées l'une au-dessus de l'autre et réfrigérées ou sont déposées côte à côte.

13. Procédé selon l'une des revendications 1 à 12, dans lequel une couche est déposée sur la surface du substrat, pour stockage et/ou manipulation, avec laquelle les microgouttes contenant les cellules ou des fractions de celles-ci sont susceptibles d'être décollées et fixées en position, en tirant.

14. Procédé selon l'une des revendications 1 à 12, dans lequel les cellules, avant leur congélation et/ou après leur décongélation par chauffage du récepteur jusqu'à une température se situant au-dessus du point de congélation de la solution d'enrobage, sont manipulées au moyen de champs électriques ou maintenues en suspension dans la solution ambiante.

15. Procédé de manipulation à basse température d'objets microscopiques, en particulier d'objets, d'agglomérations de cellules, de cellules individuelles ou de fractions constitutives de cellules biologiques, sur des surfaces formant substrats, se caractérisant par les étapes consistant à :
- faire adhérer avec immobilisation en position les objets sur la surface formant substrat à l'état réfrigéré, et
- traiter les objets en retirant la substance constitutive des objets.

16. Procédé selon la revendication 15, dans lequel les objets englobent des cellules ou des agglomérations de cellules ou des fractions constitutives de cellules biologiques et lors de la manipulation duquel de la substance constitutive de cellules est prélevée.

17. Procédé selon la revendication 15 ou 16, dans lequel l'enlèvement ou le prélèvement de substance englobe un prélèvement mécanique, une ablation optique, une attaque caustique par congélation et/ou une évaporation sous vide.

18. Procédé selon l'une des revendications 15 à 17, dans lequel, dans une autre étape, une substance d'apport est déposée et/ou échangée, la substance d'apport ayant une origine synthétique, génétique ou cellulaire ou étant prévue pour réaliser, après une décongélation des objets, un scellement des objets partiellement prélevés tout en leur conservant leur vitalité.

19. Procédé selon l'une des revendications 15 à 18, dans lequel le maintien en position immobilisée s'opère à l'aide d'un procédé selon l'une des revendications 1 à 14.

20. Dispositif de cryoconservation et de manipulation à basse température d'objets microscopiques, en particulier d'objets, d'agglomérations de cellules, de cellules individuelles ou de fractions constitutives de cellules biologiques, sur des surfaces formant substrats, caractérisé en ce qu'il comprend un dispositif de projection de microgouttes destiné à l'application contrôlée dans le temps et dans l'espace de gouttes d'une solution d'enrobage avec les objets biologiques enfermés dans celles-ci, sur un récepteur-substrat susceptible d'être amené en équilibre de température, qui constitue la surface formant substrat.

21. Dispositif selon la revendication 20, dans lequel des moyens de manipulation pour le stockage et/ou la manipulation des objets déposés sont prévus.

22. Dispositif selon la revendication 20 ou 21, dans lequel le récepteur-substrat possède une structure superficielle qui comprend notamment des microélectrodes, des éléments de détection ou des composants électroniques, des dépressions, de protubérances, des solutions de continuité ou des canaux, ou des structures fines telles que des rayures, des colonnes, des pointes, des remblais, qui agrandissent la surface, dont les dimensions sont d'un ordre micrométrique (µm) ou submicrométrique.

23. Dispositif selon l'une des revendications 20 à 22, dans lequel le dispositif de projection de microgouttes et/ou le récepteur-substrat sont faits d'un matériau semi-conducteur, et sont notamment à base de silicium.

24. Dispositif selon l'une des revendications 20 à 23, dans lequel le récepteur-substrat se trouve, lors de la projection, à une température T1 supérieure au point de congélation de l'eau et après la projection est susceptible d'être refroidi et maintenu à une température de conservation T2 se situant dans une fourchette de -5°C à -273°C, le récepteur-substrat pouvant être refroidi et/ou réchauffé suivant des programmes de régulation de température fixés dans le temps et étant susceptible d'être refroidi par exemple par un bain de fluide frigorigène, qui renferme notamment de l'azote liquide, ou l'atmosphère gazeuse du bain de fluide frigorigène.

25. Dispositif selon l'une des revendications 20 à 24, dans lequel les moyens de manipulation comprennent une lame de microtome, une microperceuse ou une microfraiseuse, un rayon laser ou un autre élément, par l'intermédiaire desquels des fractions de substance sont prélevées dans ou retirées des microgouttes ou des cellules, à l'état congelé à très basse température, par voie mécanique, thermique ou optique.

26. Dispositif selon l'une des revendications 20 à 25, dans lequel la température du substrat et la température des gouttes peuvent être réglées indépendamment l'une de l'autre et, pour les microgouttes à projeter, peut se situer également bien au-dessus du point de congélation de la solution constitutive des gouttes.

27. Dispositif de manipulation à basse température d'objets microscopiques, en particulier d'objets, d'agglomérations de cellules, de cellules individuelles ou de fractions constitutives de cellules biologiques, sur des surfaces formant substrats, caractérisé en ce qu'il comprend
- des moyens permettant de régler la température du substrat dans des conditions telles que les objets adhèrent, immobilisés en position, à l'état congelé sur la surface du substrat, et
- des moyens de manipulation qui sont prévus pour le prélèvement de matière constitutive des objets.

28. Dispositif selon la revendication 27, dans lequel les moyens de manipulation comprennent une lame de microtome, une microperceuse ou une microfraiseuse, un rayon laser ou un autre élément, par l'intermédiaire desquels des fractions de substance peuvent être prélevées dans ou retirées des microgouttes ou des cellules, à l'état congelé à très basse température, par voie mécanique, thermique ou optique.

29. Mise en oeuvre du procédé ou du dispositif selon l'une des revendications 1 à 28 pour la cryoconservation de cellules destinées à une banque de cellules utilisable à des fins médicales, biologiques, pharmaceutiques ou autre, ou pour la fabrication de substrats sous la forme de microplaquettes d'essai, détecteur, élément de filtrage pour l'établissement des diagnostics médicaux, la technique de l'environnement et la recherche pharmaceutique.
